# EUROPEAN PATENT APPLICATION

(11) **EP 2 527 636 A1**
(43) Date of publication of application: **28.11.2012**
(21) Application number: 11732817.9
(22) Date of filing: 17.01.2011
(51) Int. Cl.: F02M 25/022, F02B 47/02, F02M 25/00, F02M 37/00

(54) **FUEL SUPPLY DEVICE WITH ANTI-FLASH DEVICE**

(30) Priority: 18.01.2010 JP 2010007894
(71) Applicant: Kawasaki Jukogyo Kabushiki Kaisha, Kobe-shi, Hyogo 650-8670 (JP)
(72) Inventor: TOYODA, Takeshi, Hyogo 650-8670 (JP); KAKAMU, Koki, Hyogo 650-8670 (JP)
(74) Representative: Leinweber & Zimmermann
(86) International application number: PCT/JP2011/000189
(87) International publication number: WO 2011/086947

(57) **Abstract**

A fuel supply apparatus (11) with an anti-flashing equipment is configured such that a water-emulsion fuel obtained by mixing first fuel oil and water is able to be circulated in a circulation line (15) and the water-emulsion fuel circulating in the circulation line (15) is able to be supplied to a diesel engine (16) connected to the circulation line (15), wherein: an anti-flashing pump (P2) is connected to the circulation line (15) as a backup of a fuel supply pump (P1) configured to supply the first fuel oil to a mixer (14); the fuel supply pump (P1) is driven by a first electric motor (M1); and the anti-flashing pump (P2) is driven by a second air motor (M2).

## Description

### Technical Field

The present invention relates to a fuel supply apparatus with an anti-flashing equipment, the fuel supply apparatus being configured to supply a water-emulsion fuel to a stationary or mobile diesel engine, especially a marine diesel engine, the water-emulsion fuel being obtained by mixing fuel oil and water.

### Background Art

As one technology for reducing NOₓ in an exhaust gas of an internal combustion engine, there is a water-emulsion fuel obtained by mixing and stirring fuel oil and water. It is generally confirmed that the NOₓ in the exhaust gas can be reduced by using the water-emulsion fuel as the fuel of the internal combustion engine. The water-emulsion fuel is also applicable to marine diesel engines.

In the marine diesel engines, Bunker C can be used as the fuel oil. In the case of using the water-emulsion fuel, Bunker C can be used as the fuel oil that is a base of the water-emulsion fuel.

It should be noted that the water-emulsion fuel using Bunker C as its base is extremely high in viscosity. Therefore, in order to supply this water-emulsion fuel to the diesel engine, the viscosity of the water-emulsion fuel needs to be lowered by heating the water-emulsion fuel to 100°C or higher. However, since the water-emulsion fuel contains water, the water contained in the water-emulsion fuel evaporates by heating the water-emulsion fuel under atmospheric pressure. Therefore, in the fuel supply apparatus configured to supply the water-emulsion fuel using Bunker C as its base to the diesel engine, the water-emulsion fuel needs to be pressurized by a pressure pump.

However, in this fuel supply apparatus, if the pressure pump has broken and does not normally operate, this causes a possibility that supply pressure of the water-emulsion fuel in a supply pipe decreases, the water contained in the high-temperature water-emulsion fuel of 100°C or higher evaporates (flashes) all at once, and the supply pipe and devices connected to the supply pipe are damaged.

Here, if the pressure pump breaks and does not operate, it is contemplated that the water-emulsion fuel in the supply pipe is transferred to and stored in a buffer tank disclosed in, for example, PTL 1. This buffer tank is provided in an emulsion fuel supply apparatus.

### Citation List

### Patent Literature

PTL 1: Japanese Laid-Open Patent Application Publication No. 6-159149

### Summary of Invention

### Technical Problem

However, according to the above conventional emulsion fuel supply apparatus, the water-emulsion fuel in the supply pipe cannot be transferred to and stored in the buffer tank immediately after the pressure pump has broken and does not operate, and there is a possibility that during this transfer time, a part of the water contained in the water-emulsion fuel evaporates and this damages the supply pipe and devices connected to the supply pipe. In addition, the structure of the water-emulsion fuel stored in the buffer tank as above breaks by the flash, so that the properties of the water-emulsion fuel are unstable. Therefore, the water-emulsion fuel is difficult to recycle and is discarded.

The present invention was made to solve the above problems, and an object of the present invention is to provide a fuel supply apparatus with an anti-flashing equipment, the fuel supply apparatus being configured such that when a fuel supply pump or fuel circulating pump configured to supply a water-emulsion fuel to a diesel engine has become inoperative, an anti-flashing pump is driven to maintain the pressure of the high-temperature water-emulsion fuel in a circulation line at high pressure, and thus, water contained in the high-temperature water-emulsion fuel can be prevented from evaporating.

### Solution to Problem

A fuel supply apparatus with an anti-flashing equipment according to a first aspect of the present invention is a fuel supply apparatus with an anti-flashing equipment, the fuel supply apparatus being configured such that a water-emulsion fuel obtained by mixing fuel oil and water by using a mixer is able to be circulated in a predetermined circulation line and the water-emulsion fuel circulating in the circulation line is able to be supplied to a diesel engine connected to the circulation line, the fuel supply apparatus including a fuel supply pump configured to supply the fuel oil to the mixer and apply predetermined pressure to the water-emulsion fuel in the circulation line, wherein: an anti-flashing pump is connected to the circulation line as a backup of the fuel supply pump; the fuel supply pump is driven by an electric motor; and the anti-flashing pump is driven by a fluid motor.

According to the fuel supply apparatus with the anti-flashing equipment of the first aspect of the present invention, in a case where the fuel supply pump has become inoperative due to the breakdown of an electric system or the breakdown of the fuel supply pump or the electric motor configured to drive the fuel supply pump, and this has decreased the pressure of the high-temperature high-pressure water-emulsion fuel in the circulation line, and this has caused a possibility that water particles mixed in the high-temperature water-emulsion fuel evaporate (flash), the anti-flashing pump (fluid motor) provided as the backup of the fuel supply pump can be driven to maintain the pressure of the high-temperature water-emulsion fuel at such predetermined pressure that the water particles mixed in the high-temperature water-emulsion fuel in the circulation line do not evaporate all at once. With this, the water particles mixed in the high-temperature water-emulsion fuel in the circulation line can be prevented from evaporating all at once.

The anti-flashing pump is driven by the fluid motor, and, for example, pressure fluid prestored in a pressure tank can be used as the pressure fluid for driving the fluid motor. The pressure of the pressure fluid for driving the fluid motor can be obtained by the pressure of the pressure fluid prestored in the pressure tank.

When the fuel supply pump is in a stop state and the diesel engine is also in a stop state, the amount of water-emulsion fuel in the circulation line decreases little or the amount of reduction of the water-emulsion fuel is small. Therefore, the amount of pressure fluid necessary to drive the fluid motor is small, and the amount of reduction of the pressure fluid stored in the pressure tank is also small. On this account, the water-emulsion fuel can be maintained at the predetermined pressure for a long period of time.

In order to lower the viscosity of the water-emulsion fuel to facilitate the supply of the water-emulsion fuel to the diesel engine, the water-emulsion fuel in the circulation line is increased in temperature (for example, 100°C or higher) and then supplied to the diesel engine. In addition, the water-emulsion fuel is increased in pressure in order to satisfy a condition required by the diesel engine and prevent the water contained in the water-emulsion fuel from evaporating.

The fuel supply apparatus with the anti-flashing equipment according to a second aspect of the present invention is a fuel supply apparatus with an anti-flashing equipment, the fuel supply apparatus being configured such that a water-emulsion fuel obtained by mixing fuel oil and water by using a mixer is able to be circulated in a predetermined circulation line and the water-emulsion fuel circulating in the circulation line is able to be supplied to a diesel engine connected to the circulation line, the fuel supply apparatus including a fuel circulating pump connected to the circulation line in series and configured to cause the water-emulsion fuel obtained by the mixer to circulate in the circulation line and apply predetermined pressure to the water-emulsion fuel in the circulation line, wherein: an anti-flashing pump is connected to the circulation line as a backup of the fuel circulating pump; the fuel circulating pump is driven by an electric motor; and the anti-flashing pump is driven by a fluid motor.

According to the fuel supply apparatus with the anti-flashing equipment of the second aspect of the present invention, as with the first aspect of the present invention, in a case where the fuel circulating pump has become inoperative due to the breakdown of an electric system or the breakdown of the fuel circulating pump or the electric motor configured to drive the fuel circulating pump, and this has decreased the pressure of the high-temperature high-pressure water-emulsion fuel in the circulation line, and this has caused a possibility that water particles mixed in the high-temperature water-emulsion fuel evaporate (flash), the anti-flashing pump (fluid motor) provided as the backup of the fuel circulating pump can be driven to maintain the pressure of the high-temperature water-emulsion fuel at such predetermined pressure that the water particles mixed in the high-temperature water-emulsion fuel in the circulation line do not evaporate all at once. With this, the water particles mixed in the high-temperature water-emulsion fuel in the circulation line can be prevented from evaporating all at once.

The anti-flashing pump is driven by the fluid motor, and, for example, the pressure fluid prestored in the pressure tank can be used as the pressure fluid for driving the fluid motor. The pressure of the pressure fluid for driving the fluid motor can be obtained by the pressure of the pressure fluid prestored in the pressure tank.

In the fuel supply apparatus with the anti-flashing equipment according to the present invention, the fluid motor may be an air motor, and a pressure tank configured to store pressure air may be connected to the air motor.

With this, when the fuel supply pump or the fuel circulating pump has become inoperative, the pressure air stored in the pressure tank can be supplied to the air motor, and the anti-flashing pump can be driven by the air motor.

In the fuel supply apparatus with the anti-flashing equipment according to the present invention, the mixer may be connected to the circulation line in series.

With this, the fuel oil and water of the water-emulsion fuel circulating in the circulation line can be appropriately mixed with each other at all times, and the mixed state of the water-emulsion fuel can be maintained. By connecting the mixer to the circulation line in series, the water particles mixed in the water-emulsion fuel in the mixer can be prevented from evaporating. As above, the reason why the water particles can be prevented from evaporating is because the inside of the circulation line can be maintained at high pressure by the operation of the anti-flashing pump when the fuel supply pump or the fuel circulating pump has become inoperative, and thus, the water particles in the mixer can be prevented from evaporating.

In the fuel supply apparatus with the anti-flashing equipment according to the present invention, the diesel engine may be a marine diesel engine.

As above, by applying the fuel supply apparatus with the anti-flashing equipment to the marine diesel engine, the marine diesel engines using the water-emulsion fuel can be spread, and natural environments can be protected.

### Advantageous Effects of Invention

According to the fuel supply apparatus with the anti-flashing equipment of the first or second aspect of the present invention, in a case where the fuel supply pump or the fuel circulating pump has become inoperative, the anti-flashing pump can be driven to maintain the high-temperature water-emulsion fuel in the circulation line at the predetermined pressure. With this, the water particles mixed in the high-temperature water-emulsion fuel in the circulation line can be prevented from evaporating (flashing) all at once. Therefore, it is possible to avoid the breakdown or damages of the diesel engine, the circulation line, and various devices connected to the circulation line, the breakdown or damages being caused since the water particles evaporate all at once.

Since the water particles mixed in the water-emulsion fuel in the circulation line can be prevented from evaporating, the water-emulsion fuel in the circulation line can be used in the diesel engine, which is economical.

### Brief Description of Drawings

[Fig. 1] Fig. 1 is a circuit diagram showing a fuel supply apparatus with an anti-flashing equipment according to Embodiment 1 of the present invention.
[Fig. 2] Fig. 2 is a circuit diagram showing the fuel supply apparatus with the anti-flashing equipment according to Embodiment 2 of the present invention.
[Fig. 3] Fig. 3 is a circuit diagram showing the fuel supply apparatus with the anti-flashing equipment according to Embodiment 3 of the present invention.
[Fig. 4] Fig. 4 is a circuit diagram showing the fuel supply apparatus with the anti-flashing equipment according to Embodiment 4 of the present invention.

### Description of Embodiments

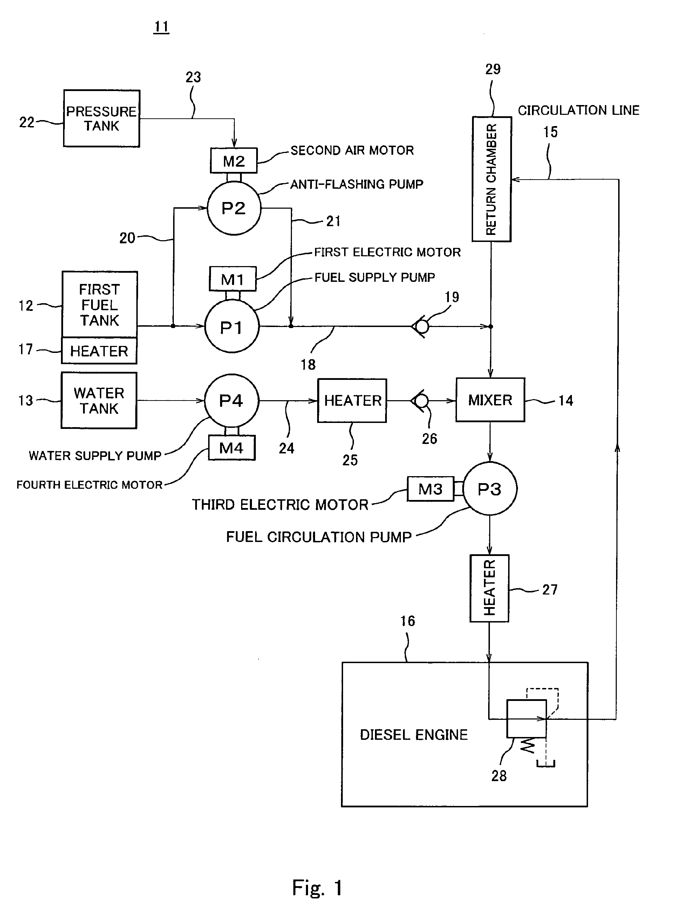

Hereinafter, Embodiment 1 of a fuel supply apparatus with an anti-flashing equipment (hereinafter may be simply referred to as a "fuel supply apparatus") according to the present invention will be explained in reference to Fig. 1. As shown in Fig. 1, a fuel supply apparatus 11 is configured such that: a water-emulsion fuel obtained by mixing first fuel oil stored in a first fuel tank 12 and water stored in a water tank 13 by using a mixer 14 is caused to increase in temperature and pressure and circulate in a predetermined circulation line 15; and the water-emulsion fuel circulating in the circulation line 15 is supplied to a diesel engine 16 connected to the circulation line 15. As shown in Fig. 1, an anti-flashing pump P2 as a backup of a fuel supply pump P1 configured to supply the first fuel oil to the mixer 14 is connected to the circulation line 15.

According to the fuel supply apparatus 11 with the anti-flashing equipment, in a case where the fuel supply pump P1 configured to be driven by a first electric motor M 1 cannot be driven due to, for example, the breakdown of an electric system, a second air motor M2 can be driven by pressure air, and the anti-flashing pump P2 can be driven by this second air motor M2.

As above, for example, even when the power goes out, the high-temperature water-emulsion fuel in the circulation line 15 can be maintained at predetermined pressure or higher by driving the anti-flashing pump P2. Thus, the water contained in the high-temperature water-emulsion fuel can be prevented from evaporating.

In order to lower the viscosity of the water-emulsion fuel to facilitate the supply of the water-emulsion fuel to the diesel engine 16, the water-emulsion fuel in the circulation line 15 is increased in temperature (100°C or higher) and then supplied to the diesel engine 16. In addition, the water-emulsion fuel is increased in pressure in order to satisfy a condition required by the diesel engine 16 and prevent the water contained in the water-emulsion fuel from evaporating.

The diesel engine 16 (engine) shown in Fig. 1 is a stationary or mobile diesel engine. In the present embodiment, the diesel engine 16 is a marine diesel engine.

The first fuel tank 12 can store the first fuel oil and is provided with a heater 17. The first fuel oil in the first fuel tank 12 can be heated to, for example, about 80°C by the heater 17. The first fuel oil is, for example, Bunker C.

The fuel supply pump P1 can supply the first fuel oil in the first fuel tank 12 to the mixer 14 and apply predetermined pressure to the water-emulsion fuel in the circulation line 15. The fuel supply pump P1 is provided on a portion of a pipe 18 connecting an exit of the first fuel tank 12 and a first entrance of the mixer 14. The fuel supply pump P1 is configured to be driven by the first electric motor M1.

As shown in Fig. 1, a check valve 19 is provided on a portion of the pipe 18 so as to be located downstream of the fuel supply pump P1. The check valve 19 prevents the first fuel oil and the water-emulsion fuel in the circulation line 15 from flowing backward from the mixer 14 side (circulation line 15 side) to the first fuel tank 12 side.

The anti-flashing pump P2 is provided on pipes 20 and 21 as a backup of the fuel supply pump P1 so as to be placed in parallel with the fuel supply pump P1. To be specific, suction ports of the anti-flashing pump P2 and the fuel supply pump P1 are connected to each other via the pipe 20, and discharge ports thereof are connected to each other via the pipe 21. The anti-flashing pump P2 is configured to be driven by the second air motor M2 (fluid motor).

As shown in Fig. 1, an exit of a pressure tank 22 configured to store the pressure air is connected to the second air motor M2 via a pipe 23. With this, when the fuel supply pump P1 has become inoperative, the pressure air stored in the pressure tank 22 can be supplied to the second air motor M2, and the anti-flashing pump P2 can be driven by the second air motor M2.

The anti-flashing pump P2, the second air motor M2, and the pressure tank 22 constitute an anti-flashing equipment.

The water tank 13 can store water. A water supply pump P4 is connected to an exit of the water tank 13.

The water supply pump P4 can supply the water in the water tank 13 to the mixer 14 and is provided on a portion of a pipe 24 connecting the exit of the water tank 13 and a second entrance of the mixer 14. The water supply pump P4 is configured to be driven by a fourth electric motor M4.

As shown in Fig. 1, a heater 25 and a check valve 26 are provided on portions of the pipe 24 so as to be located downstream of the water supply pump P4 in this order. The heater 25 can heat the water flowing through the pipe 24 to, for example, about 90°C. The check valve 26 prevents the water and the water-emulsion fuel in the circulation line 15 from flowing backward from the mixer 14 side (circulation line 15 side) to the water tank 13 side.

Next, the circulation line 15 shown in Fig. 1 will be explained. The circulation line 15 is formed by a pipe connected in an annular shape and is configured such that the water-emulsion fuel flows through the circulation line 15 in a counterclockwise direction. By the circulation line 15, the water-emulsion fuel circulating in the circulation line 15 can be supplied to the diesel engine 16 connected to the circulation line 15. The mixer 14, a fuel circulation pump P3, a heater 27, the diesel engine 16 (pressure reducing valve 28), and a return chamber 29 are provided on the circulation line 15.

The mixer 14 can produce the water-emulsion fuel by mixing and stirring the first fuel oil supplied by the fuel supply pump P1 and the water supplied by the water supply pump P4. The water-emulsion fuel produced by the mixer 14 is supplied to the fuel circulation pump P3 provided downstream of the mixer 14.

The fuel circulation pump P3 can increase the pressure of the water-emulsion fuel in the circulation line 15 to predetermined pressure and cause the water-emulsion fuel to circulate. The fuel circulation pump P3 is configured to be driven by a third electric motor M3.

The heater 27 can heat the water-emulsion fuel discharged from the fuel circulation pump P3 to, for example, about 150°C.

The diesel engine 16 is connected to the circulation line 15 and is configured to receive the water-emulsion fuel. The diesel engine 16 is provided with a fuel injection pump (not shown), and the fuel injection pump can increase the pressure of the water-emulsion fuel supplied through the circulation line 15 up to injection pressure and inject the water-emulsion fuel from a fuel injection valve of the diesel engine 16 to a combustion chamber of the diesel engine 16.

As shown in Fig. 1, the pressure reducing valve 28 is provided on the circulation line 15 provided in the diesel engine 16. The pressure reducing valve 28 functions to adjust the pressure of the fuel returning from the diesel engine 16 to be the same as the pressure of the fuel supplied through the pipe 18.

The return chamber 29 is a chamber provided for returning the water-emulsion fuel unconsumed in the diesel engine 16 to the mixer 14 through the circulation line 15.

Discharge pressure of each of the fuel supply pump P1, the anti-flashing pump P2, and the water supply pump P4 shown in Fig. 1 is, for example, about 0.6 MPa, and discharge pressure of the fuel circulation pump P3 shown in Fig. 1 is, for example, about 1.2 MPa. The temperature of the first fuel oil heated by the heater 17 is, for example, about 80°C, and the temperature of the water heated by the heater 25 is, for example, about 90°C. The temperature of the water-emulsion fuel heated by the heater 27 is, for example, about 150°C.

Next, the actions of the fuel supply apparatus 11 with the anti-flashing equipment configured as above will be explained. According to the fuel supply apparatus 11 with the anti-flashing equipment, in a case where the fuel supply pump P1 has become inoperative due to the breakdown (for example, power failure) of the electric system or the breakdown of the fuel supply pump P1 shown in Fig. 1 or the first electric motor M1 configured to drive the fuel supply pump P1, and this has decreased the pressure of the high-temperature high-pressure water-emulsion fuel in the circulation line 15, and this has caused a possibility that water particles mixed in the high-temperature water-emulsion fuel evaporate (flash), the anti-flashing pump P2 (second air motor M2) provided as the backup of the fuel supply pump P1 can be driven to maintain the pressure of the high-temperature water-emulsion fuel at such predetermined pressure that the water particles mixed in the high-temperature water-emulsion fuel in the circulation line 15 do not evaporate all at once. With this, the water particles mixed in the high-temperature water-emulsion fuel in the circulation line 15 can be prevented from evaporating all at once.

As a result, the breakdown and damages of the diesel engine 16, the circulation line 15, and various devices, such as the mixer 14, fuel circulation pump P3, and heater 27 connected to the circulation line 15, can be avoided, the breakdown and damages being caused since the water particles evaporate all at once.

Since the water particles mixed in the high-temperature water-emulsion fuel in the circulation line 15 can be prevented from evaporating, the water-emulsion fuel in the circulation line 15 can be used in the diesel engine 16, which is economical.

When the fuel supply pump P1 is in a stop state and the diesel engine 16 is also in a stop state, the amount of water-emulsion fuel in the circulation line 15 decreases little or the amount of reduction of the water-emulsion fuel is small. Therefore, the amount of pressure air necessary to drive the second air motor M2 is small, and the amount of reduction of the pressure air stored in the pressure tank 22 is also small. On this account, the water-emulsion fuel can be maintained at the predetermined pressure for a long period of time.

Although the second air motor M2 is used in the above embodiment, an oil hydraulic motor may be used instead. Pressure oil used by the oil hydraulic motor may be stored in the pressure tank 22, and the pressure in the pressure tank 22 may be obtained by the pressure of the pressure air stored in another pressure tank.

Next, a case where the anti-flashing pump P2 and the second air motor M2 shown in Fig. 1 are driven and devices configured to drive the anti-flashing pump P2 and the second air motor M2 will be explained. The purpose of driving the anti-flashing pump P2 and the second air motor M2 is to, when the pressure of the high-temperature high-pressure water-emulsion fuel in the circulation line 15 has decreased and this has caused a possibility that the water particles mixed in the high-temperature water-emulsion fuel evaporate, maintain the high-temperature water-emulsion fuel in the circulation line 15 at high pressure, that is, maintain the high-temperature water-emulsion fuel at such predetermined pressure that the water particles mixed in the high-temperature water-emulsion fuel do not evaporate all at once.

Therefore, one example of a case where the anti-flashing pump P2 and the second air motor M2 are driven is a case where the electric system breaks (the power goes out) and both the first electric motor M1 and the third electric motor M3 stop, and thus, the fuel supply pump P1 and the fuel circulation pump P3 become inoperative.

As a device configured to automatically drive the anti-flashing pump P2 and the second air motor M2 in a case where the fuel supply pump P1 and the fuel circulation pump P3 has become inoperative due to the breakdown (for example, power failure) of the electric system as above, a device may be configured, in which a solenoid valve is provided at a pressure air exit of the pressure tank 22 and automatically opens when, for example, the electric system breaks.

Moreover, as a device configured such that a solenoid valve automatically opens when, for example, the power supply system breaks, a device may be configured to include a solenoid valve configured to, for example, be in a closed state when the power supply system is normal and become an open state when the power supply system breaks. Moreover, the solenoid valve may be configured to be in the closed state when the power supply system is normal and become the open state by a battery when the power supply system breaks.

Further, as a device configured to drive the anti-flashing pump P2 and the second air motor M2 in a case where the fuel supply pump P1 has become inoperative due to a reason other than the breakdown (for example, power failure) of the electric system, a device may be configured, in which a pressure gauge is provided on the pipe 18 connected to the discharge port of the fuel supply pump P1 and the anti-flashing pump P2 and the second air motor M2 are driven when the ejecting pressure of the fuel supply pump P1 becomes equal to or lower than predetermined pressure.

The second air motor M2 is configured to be driven and stopped by a predetermined controller, not shown.

Further, in the embodiment shown in Fig. 1, the mixer 14 is connected to the circulation line 15 in series. With this, the first fuel oil and water of the water-emulsion fuel circulating in the circulation line 15 can be appropriately mixed with each other at all times, and the mixed state of the water-emulsion fuel can be maintained. By connecting the mixer 14 to the circulation line 15 in series, the water particles mixed in the water-emulsion fuel in the mixer 14 can be prevented from evaporating. As above, the reason why the water particles can be prevented from evaporating is because the inside of the circulation line 15 can be maintained at high pressure by the operation of the anti-flashing pump P2 when the fuel supply pump P1 has become inoperative, and thus, the water particles in the mixer 14 can be prevented from evaporating.

The fuel supply apparatus 11 with the anti-flashing equipment shown in Fig. 1 is used in the marine diesel engine 16. As above, by using the fuel supply apparatus 11 with the anti-flashing equipment in the marine diesel engine 16, the marine diesel engines using the water-emulsion fuel can be spread, and natural environments can be protected.

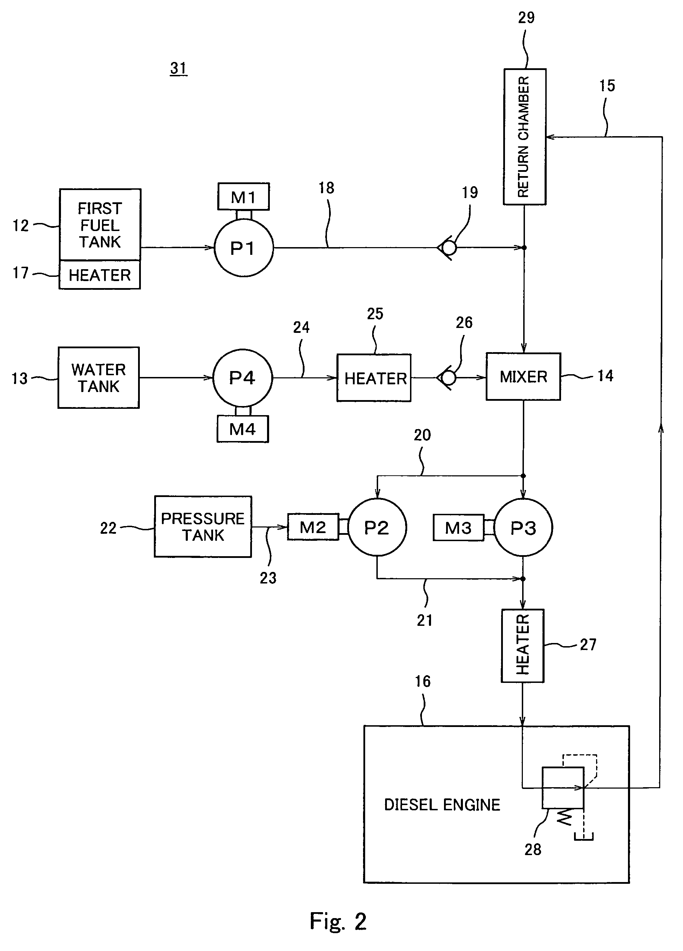

Next, Embodiment 2 of a fuel supply apparatus 31 with an anti-flashing equipment according to the present invention shown in Fig. 2 will be explained. Embodiment 2 shown in Fig. 2 and Embodiment 1 shown in Fig. 1 are different from each other in that: in Embodiment 1 shown in Fig. 1, the anti-flashing pump P2 and the second air motor M2 are connected to the circulation line 15 as the backups of the fuel supply pump P1 and the first electric motor M1, and the pressure tank 22 is connected to the second air motor M2; and in Embodiment 2 shown in Fig. 2, the anti-flashing pump P2 and the second air motor M2 are connected to the circulation line 15 as the backups of the fuel circulation pump P3 and the third electric motor M3, and the pressure tank 22 is connected to the second air motor M2.

Other than the above, Embodiment 2 is the same as Embodiment 1, and the actions thereof are the same as those of Embodiment 1. Therefore, the same reference signs are used for the same components, and explanations thereof are omitted.

The anti-flashing pump P2 is provided on the circulation line 15 as the backup of the fuel circulation pump P3 so as to be placed in parallel with the fuel circulation pump P3. To be specific, suction ports of the anti-flashing pump P2 and the fuel circulation pump P3 are connected to each other via the pipe 20, and discharge ports thereof are connected to each other via the pipe 21. The anti-flashing pump P2 is configured to be driven by the second air motor M2.

As shown in Fig. 2, the exit of the pressure tank 22 configured to store the pressure air is connected to the second air motor M2 via the pipe 23. When the fuel circulation pump P3 has become inoperative, the pressure air stored in the pressure tank 22 can be supplied to the second air motor M2, and the anti-flashing pump P2 can be driven by the second air motor M2.

According to the fuel supply apparatus 31 with the anti-flashing equipment in Embodiment 2 configured as above, as with Embodiment 1, in a case where both the fuel circulation pump P3 and the fuel supply pump P1 have become inoperative due to, for example, the breakdown (for example, power failure) of the electric system, and this has decreased the pressure of the high-temperature high-pressure water-emulsion fuel in the circulation line 15, and this has caused a possibility that the water particles mixed in the high-temperature water-emulsion fuel evaporate, the anti-flashing pump P2 provided as the backup of the fuel circulation pump P3 and the second air motor M2 can be driven to maintain the pressure of the high-temperature water-emulsion fuel at such predetermined pressure that the water particles mixed in the high-temperature water-emulsion fuel in the circulation line 15 do not evaporate all at once. With this, the water particles mixed in the high-temperature water-emulsion fuel in the circulation line 15 can be prevented from evaporating all at once.

The anti-flashing pump P2 is driven by the second air motor M2, and the pressure air for driving the second air motor M2 is the pressure air prestored in the pressure tank 22.

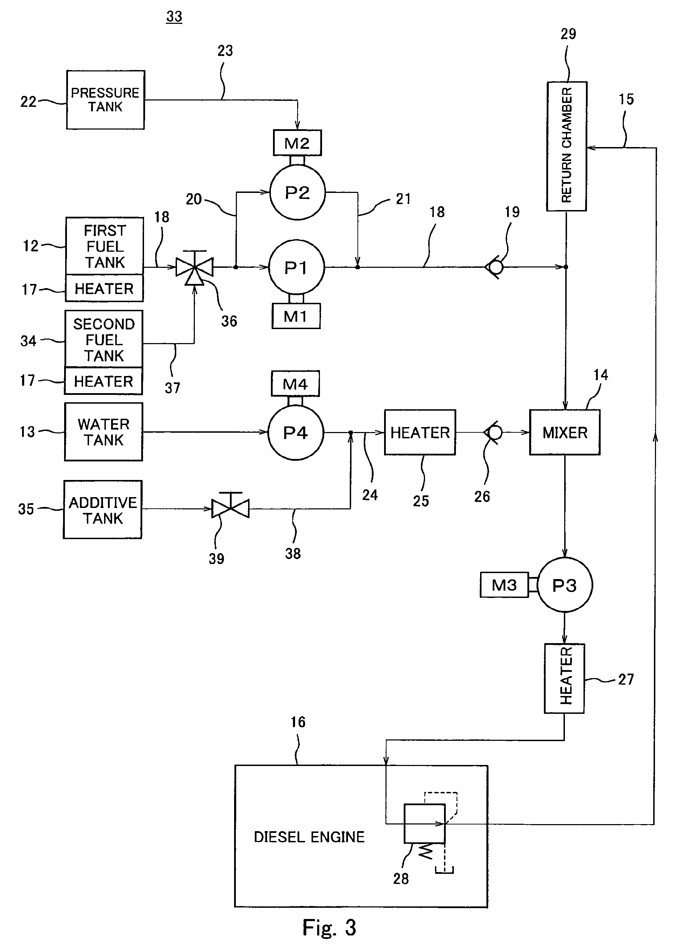

Next, Embodiment 3 of a fuel supply apparatus 33 with an anti-flashing equipment according to the present invention shown in Fig. 3 will be explained. Embodiment 3 shown in Fig. 3 and Embodiment 1 shown in Fig. 1 are different from each other as below.

In Embodiment 1 shown in Fig. 1, the water-emulsion fuel is produced by mixing the first fuel oil (for example, Bunker C) in the first fuel tank 12 and the water in the water tank 13 by using the mixer 14, and the produced water-emulsion fuel is supplied through the circulation line 15 to the diesel engine 16.

In Embodiment 3 shown in Fig. 3, the water-emulsion fuel can be produced by mixing the first fuel oil (for example, Bunker C) in the first fuel tank 12 and the water in the water tank 13 by using the mixer 14, and the produced water-emulsion fuel can be supplied through the circulation line 15 to the diesel engine 16. In addition, the water-emulsion fuel can be produced by mixing second fuel oil (for example, Bunker A) in a second fuel tank 34 (with the heater 17), the water in the water tank 13, and an additive (for example, surfactant) in an additive tank 35 by using the mixer 14, and the produced water-emulsion fuel can be supplied through the circulation line 15 to the diesel engine 16.

In Embodiment 3 shown in Fig. 3, a three-way selector valve 36 is provided on a portion of the pipe 18 connecting the exit of the first fuel tank 12 and the suction port of the fuel supply pump P1. An exit of the second fuel tank 34 is connected to the three-way selector valve 36 via a pipe 37. Therefore, by switching the three-way selector valve 36, the first fuel oil or the second fuel oil can be supplied to the mixer 14 by the fuel supply pump P1.

As shown in Fig. 3, an exit of the additive tank 35 is connected via a pipe 38 to the pipe 24 connected to a discharge port of the water supply pump P4. A valve 39 is provided on a portion of the pipe 38.

Other than the above, Embodiment 3 is the same as Embodiment 1, and the actions thereof are the same as those of Embodiment 1. Therefore, the same reference signs are used for the same components, and explanations thereof are omitted.

As above, the anti-flashing equipment can be provided also in the fuel supply apparatus shown in Fig. 3.

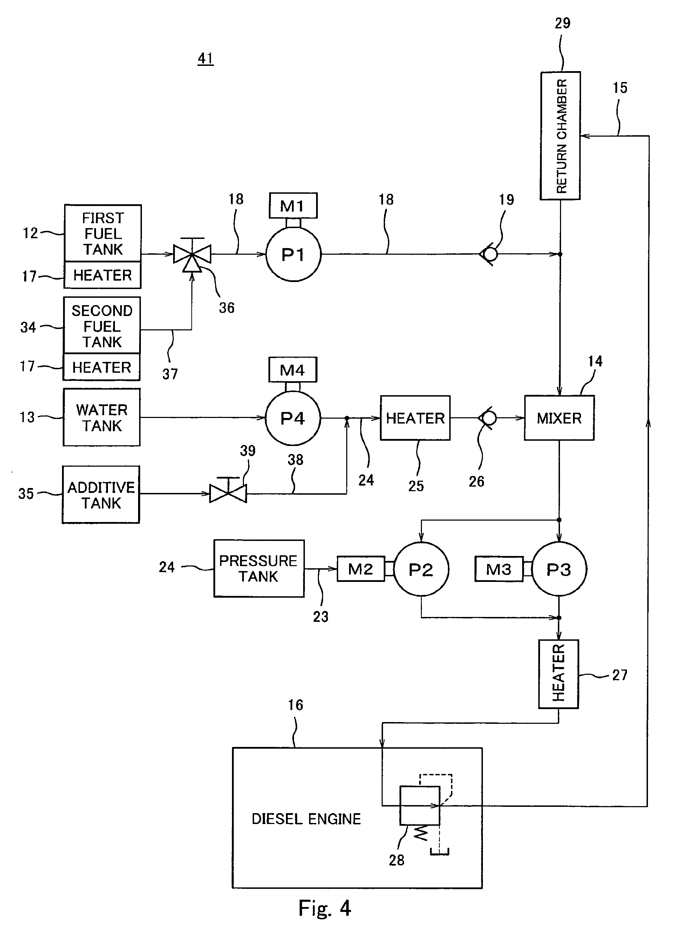

Next, Embodiment 4 of a fuel supply apparatus 41 with an anti-flashing equipment according to the present invention shown in Fig. 4 will be explained. The differences between Embodiment 4 shown in Fig. 4 and Embodiment 2 shown in Fig. 2 are the same as the differences between Embodiment 3 shown in Fig. 3 and Embodiment 1 shown in Fig. 1. The different components from Embodiment 2 are the same in configuration as the corresponding components of Embodiment 3 shown in Fig. 3, and the actions thereof are the same as those of Embodiment 3. Therefore, the same reference signs are used for the same components, and explanations thereof are omitted.

Other than the above, Embodiment 4 is the same as Embodiment 2, and the actions thereof are the same as those of Embodiment 2. Therefore, the same reference signs are used for the same components, and explanations thereof are also omitted.

As above, the anti-flashing equipment can be provided also in the fuel supply apparatus shown in Fig. 4.

In Embodiments 1 and 2 shown in Figs. 1 and 2, the water-emulsion fuel is produced by mixing the first fuel oil (for example, Bunker C) and the water by using the mixer 14, and the water-emulsion fuel is supplied through the circulation line 15 to the diesel engine 16. However, instead of this, only the first fuel oil may be supplied through the circulation line 15 to the diesel engine 16 without supplying the water.

In Embodiments 3 and 4 shown in Figs. 3 and 4, the water-emulsion fuel is produced by mixing predetermined materials among the first fuel oil (for example, Bunker C), the second fuel oil (for example, Bunker A), the water, and the additive (for example, surfactant) by using the mixer 14, and the water-emulsion fuel is supplied through the circulation line 15 to the diesel engine 16. However, instead of this, only the first fuel oil or the second fuel oil may be supplied through the circulation line 15 to the diesel engine 16 without producing the water-emulsion fuel.

In each of the above embodiments, the fuel supply apparatus 11, 31, 33, or 41 with the anti-flashing equipment according to the present invention is applied to the marine diesel engine 16 but may be applied to a stationary or mobile diesel engine.

Further, for example, in Embodiment 1 (or Embodiment 2) shown in Fig. 1 (or Fig. 2), in a case where the fuel circulation pump P3 (or the fuel supply pump P1) can drive even when the fuel supply pump P1 (or the fuel circulation pump P3) has broken and become inoperative, the water-emulsion fuel in the circulation line 15 can be maintained at high pressure by the operation of the fuel circulation pump P3 (or the fuel supply pump PI). Therefore, even when the fuel supply pump P1 (or the fuel circulation pump P3) has become inoperative as above, it is unnecessary to drive the anti-flashing pump P2.

However, in a case where the circulation line is configured to be different from that of Fig. 1 (or Fig. 2), and the water-emulsion fuel in the circulation line cannot be maintained at high pressure by the operation of the fuel circulation pump P3 (or the fuel supply pump P1), and the fuel circulation pump P3 (or the fuel supply pump P1) can be driven but the fuel supply pump P1 (or the fuel circulation pump P3) cannot be driven, the anti-flashing pump P2 needs to be driven.

In each of the above embodiments, a group of the fuel supply pump P1 and the first electric motor M1 and a group of the fuel circulation pump P3 and the third electric motor M3 are included. However, plural groups of the fuel supply pump P1 and the first electric motor M1 and plural groups of the fuel circulation pump P3 and the third electric motor M3 may be included.

### Industrial Applicability

As above, the fuel supply apparatus with the anti-flashing equipment according to the present invention has an excellent effect in which when the fuel supply pump or fuel circulating pump configured to supply the water-emulsion fuel to the diesel engine has become inoperative, the anti-flashing pump is driven to maintain the pressure of the high-temperature water-emulsion fuel in the circulation line at high pressure, and thus, the water contained in the high-temperature water-emulsion fuel can be prevented from evaporating. The present invention is suitably applicable to the fuel supply apparatus with the anti-flashing equipment.

### Reference Signs List

- 11, 31, 33, 41: fuel supply apparatus with anti-flashing equipment
- 12: first fuel tank
- 13: water tank
- 14: mixer
- 15: circulation line
- 16: diesel engine
- 17, 25, 27: heater
- 18, 20, 21, 23, 24, 37, 38: pipe
- 19, 26: check valve
- 22: pressure tank
- 28: pressure reducing valve
- 29: return chamber
- 34: second fuel tank
- 35: additive tank
- 36: three-way selector valve
- 39: valve
- P1: fuel supply pump
- P2: anti-flashing pump
- P3: fuel circulating pump
- P4: water supply pump
- M1: first electric motor
- M2: second air motor
- M3: third electric motor
- M4: fourth electric motor

## Claims

1. A fuel supply apparatus with an anti-flashing equipment, the fuel supply apparatus being configured such that a water-emulsion fuel obtained by mixing fuel oil and water by using a mixer is able to be circulated in a predetermined circulation line and the water-emulsion fuel circulating in the circulation line is able to be supplied to a diesel engine connected to the circulation line, the fuel supply apparatus comprising
a fuel supply pump configured to supply the fuel oil to the mixer and apply predetermined pressure to the water-emulsion fuel in the circulation line, wherein:
an anti-flashing pump is connected to the circulation line as a backup of the fuel supply pump;
the fuel supply pump is driven by an electric motor; and
the anti-flashing pump is driven by a fluid motor.

2. A fuel supply apparatus with an anti-flashing equipment, the fuel supply apparatus being configured such that a water-emulsion fuel obtained by mixing fuel oil and water by using a mixer is able to be circulated in a predetermined circulation line and the water-emulsion fuel circulating in the circulation line is able to be supplied to a diesel engine connected to the circulation line, the fuel supply apparatus comprising
a fuel circulating pump connected to the circulation line in series and configured to cause the water-emulsion fuel obtained by the mixer to circulate in the circulation line and apply predetermined pressure to the water-emulsion fuel in the circulation line, wherein:
an anti-flashing pump is connected to the circulation line as a backup of the fuel circulating pump;
the fuel circulating pump is driven by an electric motor; and
the anti-flashing pump is driven by a fluid motor.

3. The fuel supply apparatus with the anti-flashing equipment according to claim 1 or 2, wherein:
the fluid motor is an air motor; and
a pressure tank configured to store pressure air is connected to the air motor.

4. The fuel supply apparatus with the anti-flashing equipment according to claim 1 or 2, wherein the mixer is connected to the circulation line in series.

5. The fuel supply apparatus with the anti-flashing equipment according to claim 1 or 2, wherein the diesel engine is a marine diesel engine.
